# DEMANDE DE BREVET EUROPEEN

(11) **EP 1 143 084 A2**
(43) Date de publication de la demande: **10.10.2001**
(21) Numéro de dépôt: 01202755.3
(22) Date de dépôt: 28.06.1996
(51) Int. Cl.: E04F 13/02, C04B 41/45, B32B 13/08

(54) **Procédé de construction de seconde oeuvre, avec plaques de plâtre et enduits de bouchage et de finition**

(30) Priorité: 30.06.1995 FR 9508153
(62) Demande divisionnaire de: 96917619.7
(71) Demandeur: LAFARGE PLATRES, 84000 Avignon (FR)
(72) Inventeur: Zuber, François, 84270 Vedène (FR); Leclercq, Claude, 84800 Pernes-les-Fontaines (FR); Bourne-Chastel, Pascal, 84570 Mormoiron (FR)
(74) Mandataire: Guerre, Dominique

(57) **Abrégé**

Procédé de construction de second oeuvre, selon lequel :
(a) on dispose de plaques préfabriquées comportant chacune un corps de plâtre, au moins une feuille de papier de parement comprenant une couche externe présentant une face extérieure apparente, prête à être décorée ; d'un enduit de bouchage destiné à constituer l'essentiel des joints entre les différentes plaques ; et d'un enduit complémentaire de finition des joints ;

## Description

La présente invention concerne la construction de second oeuvre. Plus particulièrement, l'invention s'intéresse à tout procédé de construction, selon lequel on dispose, d'une part, de plaques préfabriquées, comportant un corps de plâtre et au moins une feuille de papier ou carton de parement, dont au moins une couche externe présente une face extérieure apparente, prête à être décorée, et d'autre part, d'au moins un enduit complémentaire de jointoiement pouvant être utilisé notamment pour la finition d'un joint. Ensuite, on assemble lesdits éléments plats entre eux, avec un enduit de bouchage constituant l'essentiel des joints entre les différentes plaques, et on finit les joints avec ledit enduit complémentaire, appliqué sur l'enduit de bouchage, de manière à obtenir une surface d'ensemble extérieure et apparente, relativement uniforme ou plane, y compris au niveau des joints. Un tel procédé est mis en oeuvre, par exemple pour définir des espaces à l'intérieur d'un bâtiment, notamment des cloisons.

Conformément au document EP A 0 521 804, le papier de parement peut comporter une couche supérieure dite jet supérieur, comprenant des fibres cellulosiques blanches, majoritairement chimiques, et une charge minérale de couleur claire, de préférence blanche, et une couche pigmentaire revêtissant la couche supérieure, comprenant une charge minérale de couleur claire, de préférence blanche, et un liant.

En général, la surface d'ensemble, extérieure et apparente, obtenue selon le procédé défini précédemment nécessite d'être préparée, avant de recevoir toute décoration en surface, qu'il s'agisse d'une ou plusieurs couches d'un revêtement en film, du type peinture ou laque, ou qu'il s'agisse d'une épaisseur de papier peint. Cette préparation est rendue nécessaire, notamment par les différences de teinte ou de couleur existant entre la face extérieure apparente des plaques de plâtre d'une part, et la face extérieure apparente des joints d'autre part. Cette préparation consiste, après terminaison du second oeuvre, à revêtir la surface d'ensemble obtenue, c'est-à-dire le parement des plaques plus les joints, avec une ou plusieurs couches d'une peinture ou enduit d'impression ou d'apprêt.

L'opération de préparation représente un coût supplémentaire, non négligeable, dans un processus complet de construction d'un bâtiment par exemple. Et encore, n'est-elle pas suffisante, dans certains cas, pour obtenir une surface d'ensemble décorée d'aspect uniforme, compte tenu en particulier des différences physico-mécaniques subsistant entre les joints d'un côté, et les plaques de l'autre côté.

La présente invention a pour objet de remédier aux inconvénients précités. Plus précisément, l'invention a pour objet un procédé de construction rompant avec l'approche traditionnelle retenue pour résoudre le problème exposé précédemment, c'est-à-dire supprimant la nécessité d'une préparation de la surface d'ensemble, avant toute décoration. Toutefois, l'invention a pour objet un procédé qui reste compatible avec les pratiques des professionnels de la construction, notamment ceux du second oeuvre.

Par ailleurs, le procédé est plus préférentiellement caractérisé en ce que, outre l'absorption d'eau de surface, au moins l'une quelconque des caractéristiques physiques suivante sont homogénéisées ou appariées entre plaques et enduit complémentaire, à savoir :
- la couleur ou teinte ;
- l'aspect de surface, dont la réflectance ;
- la décoloration ou coloration sous l'effet de la lumière naturelle ;

De manière avantageuse, ces différentes caractéristiques physiques sont définies comme suit :
- le facteur de réflectance de la surface d'ensemble, dont celui de la surface extérieure apparente des joints, est compris entre 70% et 80%, et de préférence entre 72% et 76%, pour une longueur d'onde de 457nm ;
- la décoloration ou coloration de la surface d'ensemble, dont celle de le face extérieure apparente des joints, représente un écart de couleur (delta E*) au plus égale à 3, après exposition pendant 72 heures à une source de rayonnement UV, disposée à 15cm de la surface, de longueur d'onde au moins égale à 290nm.

Conformément à la présente invention, le procédé se différencie de l'approche traditionnelle en ce que d'une part, la structure et/ou la composition du papier de parement, et d'autre part, la composition de l'enduit complémentaire sont ajustées l'une par rapport à l'autre, pour obtenir, à l'état sec de l'enduit complémentaire, une surface d'ensemble présentant une absorption d'eau de surface, sensiblement homogène dans pratiquement toute la surface d'ensemble, y compris au niveau de la face extérieure apparente des joints.

Par exemple, l'absorption surfacique d'eau de la surface d'ensemble, dont celle de la face extérieure des joints, n'est pas inférieure à 60 minutes, et/ou est au plus égale à 15g/m² selon le test COBB, à 23°C.

La présente invention apporte les avantages déterminants suivants, consécutifs à l'homogénéité en surface de la surface d'ensemble obtenue selon la présente invention, non seulement en termes de couleur ou teinte, mais aussi en termes de certaines caractéristiques physiques ou physico-chimiques, dont l'absorption surfacique d'eau.

Ainsi, en homogénéisant la capacité d'absorption surfacique du papier de parement et du joint complémentaire, on peut obtenir un aspect quasi parfait de la ou des couches de peinture, mais aussi une adhésion quasi uniforme d'un papier peint, ce qui favorise ultérieurement son décollement homogène.

Conformément à un mode d'exécution avantageux de l'invention, et pour une structure et/ou composition, préexistantes, de la feuille de papier de parement, on ajuste la composition de l'enduit complémentaire.

Selon une autre variante de l'invention, et à l'inverse de ce qui précède, pour une composition préexistante d'enduit complémentaire, on ajuste la composition de la feuille de papier de parement.

En pratique, et par des essais de routine, l'homme du métier compétent sait ajuster la structure et/ou la composition d'une feuille de papier de parement, et/ou la composition d'un enduit, de manière à satisfaire aux principes techniques définis précédemment, de telle sorte que les exemples décrits ci-après ne sont nullement limitatifs.

La présente invention sera maintenant décrite par référence à des plaques de plâtre préfabriquées. Ces plaques sont typiquement composées d'un corps de plâtre coulé en usine entre deux feuilles de papier constituant à la fois son parement et son armature.

Usuellement, l'une des feuilles de papier utilisées pour fabriquer les plaques de plâtre est de couleur foncée, pouvant varier entre une couleur grise et une couleur marron, car elle est composée de fibres cellulosiques n'ayant pas subi un traitement de purification particulier. Classiquement, ce papier dit gris est obtenu à partir de pâte chimique non blanchie, et/ou de pâte mécanique, et/ou de pâte thermomécanique, et/ou de pâte mi-chimique. Par pâte mécanique, on entend habituellement une pâte obtenue entièrement par des moyens mécaniques à partir de diverses matières premières, essentiellement de bois, pouvant être apportées par des produits de récupération issus du bois tels que les vieux cartons, des rognures de papier kraft et/ou de vieux journaux. Par pâte thermomécanique, on entend une pâte obtenue par traitement thermique suivi d'un traitement mécanique de la matière première. Par pâte mi-chimique, on entend une pâte obtenue en éliminant de la matière première une partie de ses composants non cellulosiques au moyen d'un traitement chimique, et nécessitant un traitement mécanique ultérieur pour disperser les fibres.

L'autre feuille présente une face apparente dite de parement, de couleur généralement plus claire que la feuille grise. Pour obtenir cette couleur plus claire, la ou les couches de cette face sont à base de pâte chimique éventuellement blanchie, composée de fibres de cellulose recyclées et/ou neuves, et/ou de pâte mécanique éventuellement blanchie. Par pâte chimique, on entend une pâte obtenue en éliminant de la matière première par un traitement chimique, par exemple par cuisson en présence d'agents chimiques appropriés tels que la soude ou des bisulfites, une très grande proportion de ses composants non cellulosiques. Quand ce traitement chimique est complété par un blanchiment, on élimine une grande partie des substances colorées, ainsi que les substances risquant de se dégrader en vieillissant et de donner des teintes jaunes désagréables liées à la présence, par exemple de lignine.

Dans un mode d'exécution préférentiel du procédé de l'invention, et conformément au document EP A 0 521 804, le papier de parement comporte une couche supérieure dite jet supérieur, comprenant des fibres cellulosiques blanches, majoritairement chimiques, une charge minérale de couleur claire, de préférence blanche, ainsi qu'une couche pigmentaire revêtissant la couche supérieure, comprenant également une charge minérale de couleur claire, de préférence blanche, et un liant. En correspondance, selon la présente invention, l'enduit complémentaire comprend une charge minérale de couleur claire, de préférence blanche, dont la granulométrie est comprise entre 5 et 35µm.

La finesse de granulométrie de la charge minérale de l'enduit complémentaire permet d'obtenir une surface lisse correspondant à celle du parement de la plaque. Une granulométrie trop grosse de la charge provoque des défauts de surface d'ensemble, tels qu'une réverbération des rayonnements lumineux sur la surface de l'enduit, différente de celle sur la surface de plaque, entraînant des différences de ton et brillance de la teinte. Une granulométrie trop importante entraîne aussi des différences d'aspect physique, liées aux différences de rugosité entre la plaque et l'enduit.

La charge minérale représente préférentiellement entre 50% et 85% du poids total de l'enduit complémentaire.

Par ailleurs, l'enduit peut comprendre un agent hydrophobe, par exemple entre 0,2% et 5%, et de préférence entre 0,5% et 3% du poids total de l'enduit, par exemple un dérivé de silicone. Cet agent permet notamment un ralentissement de la cinétique de séchage de l'enduit, ce qui favorise sa non fissuration, mais également sa meilleure résistance à l'agression de la vapeur d'eau, lors des opérations d'enlèvement de papier peint, ceci sans pour autant nuire à la bonne accroche d'une peinture ou colle à papier, sur la surface d'ensemble, dont la surface apparente des joints. En fait, cet agent hydrophobe permet de niveler les pouvoir absorbants des surfaces de l'enduit et du papier de parement de la plaque. Ainsi, toutes les peintures ou colles à papier appliquées sur la surface d'ensemble obtenue connaissent peu de décalage de cinétique d'absorption entre l'enduit et la plaque, ce qui permet d'éviter l'apparition de spectres ou de défauts d'homogénéité de teinte.

L'enduit comprend également un liant organique dispersable en phase aqueuse, dans une proportion comprise entre 1 et 20%, et préférentiellement entre 2 et 12% du poids total de l'enduit complémentaire, par exemple des polyacétates de vinyle et/ou des esters d'acide acrylique. Le choix de ce liant est important, car il doit conférer à l'enduit une souplesse suffisante pour résister aux contraintes mécaniques, et il doit présenter, à la fois, un pouvoir collant pour obtenir une bonne accroche sur la surface d'ensemble, et une bonne résistance aux agressions de la lumière UV.

En outre, on prévoit dans la composition de l'enduit un agent de maniabilité, notamment un agent rétenteur d'eau et épaississant, par exemple de la méthylhydroxyéthylcéllulose, dans une proportion de 1 à 15%, et de préférence de 2 à 12% du poids total de l'enduit complémentaire.

Enfin, on peut inclure dans la composition de l'enduit au moins un agent glissant, notamment une argile, dans la proportion de 0,1 à 2%, et préférentiellement de 0,1 à 0,6% du poids total de l'enduit complémentaire. Ces argiles sont de préférence des dérivés silicatés, et plus préférentiellement des argiles du type attapulgite.

D'autres composants, tels que des biocides, des dispersants, des agents anti-moussants, et des pigments peuvent également être incorporés dans la composition de l'enduit de manière habituelle.

L'invention sera mieux comprise par l'exemple suivant détaillé, donné à titre indicatif et non limitatif.

On part de plaques de plâtre similaires à l'exemple 5 du document EPA O 521 804, qui sont assemblées avec un joint de bouchage classique, par exemple, un enduit de joint commercialisé sous la marque déposée "PREGYLYS"® de la Société PLATRES LAFARGE. Le jet supérieur du parement de la plaque est obtenu à partir de 65% de fibres cellulosiques chimiques blanchies, et 35% de talc, et est revêtu d'une couche pigmentaire comprenant comme charge minérale, 85% en poids de CaSO₄ , 2H₂O sous forme d'aiguilles de longueur entre 3 et 5 µm, et comme liant, 10,3% en poids de copolymère styrène-butadiène. Le joint de bouchage reçoit ensuite une couche mince d'un enduit complémentaire de jointement selon l'invention ayant la composition suivante :
- 50 à 85% en poids de carbonate de calcium, granulométrie de 5 à 35 µm, en tant que charge minérale ;
- 2 à 12% en poids d'un liant comportant des polyacétates de vinyle et des esters d'acide acrylique en dispersion aqueuse ;
- 0,5 à 3% en poids d'un dérivé de silicone en tant qu'agent hydrophobe ;
- 0,1 à 0,9% d'un dérivé cellulosique du type méthylhydroxyéthylcellulose ;
- 0,1 à 0,6% d'un agent glissant du type attapulgite ;
- 1 à 12% d'un autre dérivé silicaté, en tant qu'agent glissant complémentaire ;
- 0,1 à 5% d'un sel d'ammonium d'acide polycarboxylique en tant que dispersant ;
- 0,001 à 0,015 d'oxyde de fer, en tant que pigment ;
- 0,1 à 0,3% d'une préparation de N-formoles et isothiazolinones, en tant que biocide ;
- 0,1 à 0,3% d'un agent anti-moussant classique ;
- eau qsp 100%.

Les pourcentages de poids donnés sont par rapport au poids total de l'enduit, sauf indication contraire.

Pour les besoins de comparaison, des plaques standards conformément uniquement à la norme française NF P 72-302, et ne comportant pas le jet supérieur et couche pigmentaire définis ci-dessus, sont assemblées avec un enduit de joint pour plaque de plâtre de la gamme des enduits "PREGYLYS"® , commercialisé par la Société PLATRES LAFARGE.

Les caractéristiques des deux surfaces d'ensemble ainsi formées sont comparées par application des tests suivants :
A - Degré de blancheur, ou facteur de réflectance R obtenu selon la norme NFQ 03038 à une longueur d'onde à 457nm. Ce degré représente le rapport, en pourcentage, entre le rayonnement réfléchi du corps considéré et celui d'un diffuseur parfait dans les mêmes conditions.
B - Absorption surfacique d'eau, obtenue par exemple selon le test COBB. Dans ce test, un anneau déterminant une surface de 100cm² est rempli d'eau distillée à 23°C sur environ 10mm de haut. L'eau est laissée au contact de la surface d'ensemble constituant le fond de l'anneau pendant une minute, puis l'eau est vidée et l'excédent essoré. Le gain de poids de la surface est ensuite déterminé, et ramené à une surface de 1m². Dans une variante, on dépose une goutte, de volume environ 0,05cm³, d'eau distillée à 23°C en surface. Il est important que la goutte soit déposée et non laissée tomber d'une hauteur variable qui de ce fait l'écraserait plus ou moins, ce qui fausserait le résultat. La durée en minutes est représentative de l'absorption surfacique de la surface testée.
C - Résistance au rayonnement UV, obtenue en exposant les surfaces d'ensemble, dans une enceinte comportant huit lampes à vapeur de mercure haute pression de 400 watts chacune, à une longueur d'onde qui n'est pas inférieure à 290nm. Les surfaces sont maintenues à une distance de 15cm des lampes et à une température de 60°C pendant 72 heures. Les écarts de couleur delta E* sont mesurés sur un spectrocolorimètre, selon le standard DIN 6174, sous un angle de 8°, illuminant D65 en brillant spéculaire inclus dans le système L*, a*, b*, dans lequel L* est la luminance, a * représente la transition du vert du rouge, et b* représente la transition du bleu au jaune. Un point E*, dans ce système, qui est fonction de L*, a*, b*, définit la colorimétrie d'un échantillon et l'écart est mesuré par rapport à un point de référence. De manière générale, un écart de couleur au-delà de 2 devient discernable à l'oeil nu.

Les résultats des essais (A) et (B) sont reportés dans le tableau I et ceux de l'essai (C) dans le tableau II ci-après.

**Tableau I**

| | Surface d'ensemble standard | | Surface d'ensemble selon l'invention | |
|---|---|---|---|---|
| Réflectance R (%) | Plaque | 50 à 60 | Plaque | 72 à 76 |
| | Enduit | 65 à 85 | Enduit | 72 à 76 |
| Absorption | | | | |
| COBB (g/m²) | | 19 | | 13 |
| Variante (min) | Plaque | 50 | Plaque | > = 60 |
| | Enduit | 15 | Enduit | > = 60 |

Ceci montre que la surface d'ensemble selon la présente invention est nettement plus homogène que celle d'un ensemble selon la technique habituelle. Par ailleurs, le temps d'absorption plus homogène de la surface d'ensemble permet d'utiliser une peinture de pouvoir couvrant moindre que celui qui est nécessaire avec les plaques et enduits traditionnels, et favorise également la mise en peinture.

**TABLEAU II**

| Avant exposition | Standard | | Invention | |
|---|---|---|---|---|
| Mesures initiales de la paque | L* = | 82,94 | L* = | 90,41 |
| | a* = | - 0,43 | a* = | - 0,03 |
| | b* = | 4,64 | b* = | 3,13 |
| Mesures initiales du Mesures initiales du joint | L* = | 90,70 | L* = | 89,70 |
| | a* = | 0,73 | a* = | 0,50 |
| | b* = | 5,28 | b* = | 3,60 |
| | Ecart de couleur | | Ecart de couleur | |
| | Plaque / Joint | | Plaque / Joint | |
| | delta E*= | =7,87 | delta E* = | 1 |
| Exposition aux UV pendant 72 heures | | | | |
| Mesures de la plaque après exposition | L* = | 81,10 | L* = | 90,38 |
| | a* = | 0,69 | a*= | -0,91 |
| | b* = | 12,93 | b* = | 7,40 |
| | Ecart de couleur | | Ecart de couleur | |
| | delta E* = | 8,56 ; | delta E* = | 4,36 ; |
| | jaunissement très sensible, plus taches marron | | jaunissement sensible | |
| Mesures du joint après exposition | L* = | 88,90 | L* = | 89,17 0,50 |
| | a* = | 0,91 | a* = | 0,50 |
| | b* = | 3,83 | b* = | 3,19 |
| | Ecart de couleur | | Ecart de couleur | |
| | delta E* = | 2,32 ; | delta E* = | 0,67 ; |
| | léger jaunissement plus quelques taches marron | | écart de couleur très faible | |

Ce tableau montre que l'écart de couleur avant exposition aux UV est beaucoup plus faible pour une surface d'ensemble selon l'invention, que pour une surface d'ensemble telle qu'obtenue traditionnellement.

Ce tableau montre encore que l'évolution de l'écart de couleur après exposition aux UV est beaucoup moins importante dans la surface d'ensemble selon l'invention que traditionnellement. En effet, il faut que l'écart de couleur avant exposition et après exposition soit aussi réduit que possible, afin que la surface d'ensemble ne donne l'impression à l'oeil nu d'être tachetée, ou couvertes de zones de teinte et brillance différentes.

Ceci n'est pas possible avec une surface d'ensemble obtenue avec des plaques de plâtre et des produits traditionnels, mais le très faible écart de la surface d'ensemble conformément à l'invention permet de pallier cet inconvénient.

## Revendications

1. Procédé de construction de second oeuvre, selon lequel :
(a) on dispose de plaques préfabriquées comportant chacune un corps de plâtre, au moins une feuille de papier de parement comprenant une couche externe présentant une face extérieure apparente, prête à être décorée ; d'un enduit de bouchage destiné à constituer l'essentiel des joints entre les différentes plaques ; et d'un enduit complémentaire de finition des joints ;
(b) on assemble les plaques préfabriquées entre elles avec l'enduit de bouchage ;
(c) on finit les joints avec l'enduit complémentaire, appliqué sur l'enduit de bouchage, de manière à obtenir une surface d'ensemble extérieure et apparente, relativement uniforme ou plane, y compris au niveau des joints ;
**caractérisé en ce que**, d'une part la structure et/ou la composition du papier de parement, et d'autre part, la composition de l'enduit complémentaire sont ajustées l'une par rapport à l'autre, pour obtenir, à l'état sec de l'enduit complémentaire, une surface d'ensemble présentant une absorption d'eau de surface, sensiblement homogène dans pratiquement toute la surface d'ensemble, y compris au niveau de la face extérieure apparente des joints.

2. Procédé selon la revendication 1, **caractérisé en ce que** l'absorption surfacique d'eau de la surface d'ensemble, dont celle de la face extérieure apparente des joints, est au plus égale à 15g/m² selon le test COB, à 23°C.

3. Procédé selon la revendication 1, **caractérisé en ce que** l'absorption surfacique d'eau de la surface d'ensemble, dont celle de la face extérieure apparente des joints, n'est pas inférieure à 60 minutes.

4. Procédé selon la revendication 1, **caractérisé en ce que** le facteur de réflectance de la surface d'ensemble, dont celui de la face extérieure apparente des joints, est compris entre 70% et 80%, et de préférence entre 72% et 76%, pour une longueur d'onde de 457nm.

5. Procédé selon la revendication 1, **caractérisé en ce que** d'une part la structure et/ou la composition de la feuille de papier de parement, et d'autre part la composition de l'enduit complémentaire sont ajustées l'une par rapport à l'autre pour obtenir, à l'état sec de l'enduit complémentaire, une décoloration ou coloration de la surface d'ensemble, dont celle de la face extérieure apparente des joints, présentant un écart de couleur delta E* au plus égal à 3, après exposition pendant 72 heures à une source de rayonnement UV, disposée à 15cm de la surface de longueur d'onde au moins égale à 290nm.

6. Procédé selon la revendication 1, selon lequel le papier de parement comprend une couche supérieure dite jet supérieur, comprenant des fibres cellulosiques blanches majoritairement chimiques, et une charge minérale de couleur claire, de préférence blanche, et une couche pigmentaire revêtissant la couche supérieure comprenant une charge minérale de couleur claire, de préférence blanche, et un liant, **caractérisé en ce que**, en correspondance, l'enduit complémentaire comprend une charge minérale de couleur claire, de préférence blanche, dont la granulométrie est comprise entre 5 et 35µm.

7. Procédé selon la revendication 6, **caractérisé en ce que** la charge minérale représente entre 50% et 85% du poids total de l'enduit complémentaire.

8. Procédé selon la revendication 7, **caractérisé en ce que** l'enduit complémentaire comprend un agent hydrophobe, par exemple entre 0,2% et 5% et de préférence entre 0,5% et 3% du poids total de l'enduit.

9. Procédé selon la revendication 7, **caractérisé en ce que** l'enduit complémentaire comprend un liant organique dispersable en phase aqueuse, dans une proportion comprise entre 1 et 20%, et préférentiellement entre 2 et 12% du poids total de l'enduit complémentaire.

10. Procédé selon la revendication 7, **caractérisé en ce que** l'enduit complémentaire comprend au moins un agent glissant, notamment une argile, dans la proportion de 0,1 à 2%, et préférentiellement de 0,1 à 0,6% du poids total de l'enduit complémentaire.
